# EUROPÄISCHE PATENTSCHRIFT

(11) **EP 1 336 158 B1**
(45) Veröffentlichungstag und Bekanntmachung des Hinweises auf die Patenterteilung: **26.01.2005**
(21) Anmeldenummer: 01993904.0
(22) Anmeldetag: 07.11.2001
(51) Int. Cl.: G06K 19/077

(54) **KONTAKTLOSER DATENTRÄGER**
CONTACTLESS DATA CARRIER
SUPPORT DE DONNEES SANS CONTACT

(30) Priorität: 13.11.2000 DE 10056148
(43) Veröffentlichungstag der Anmeldung: 20.08.2003
(73) Patentinhaber: Infineon Technologies AG, 81669 München (DE)
(72) Erfinder: GUNDLACH, Harald, 85354 Freising (DE); HOCHHOLZER, Michael, 85521 Ottobrunn (DE); HOLWEG, Gerald, A-8055 Graz (AT); KARGL, Walter, A-8020 Graz (AT); MUELLER-HIPPER, Andreas, 93055 Regensburg (DE); RIEDEL, Jens, 24941 Flensburg (DE)
(74) Vertreter: Epping Hermann & Fischer
(86) Internationale Anmeldenummer: PCT/DE2001/004181
(87) Internationale Veröffentlichungsnummer: WO 2002/039379

(56) Entgegenhaltungen:
- EP-A- 0 913 711
- US-A- 4 646 090
- US-A- 5 621 913
- US-A- 5 682 143

## Beschreibung

Die Erfindung betrifft einen Datenträger, der für eine kontaklose Datenübertragung geeignet ist.

Auf dem Gebiet der kontaktlosen Energie- und Datenübertragung gibt es verschiedenste Systemanforderungen, die sich vor allem durch die Reichweite, das Übertragungsmedium, Multi-TAG-Fähigkeit, also die Möglichkeit, mehrere TAGs im Einzugsbereich eines Schreib-/Lesegerätes zu erkennen, und Transaktionszeiten unterscheiden. Zu zu den Systemanforderungen kommen noch länderspezifische Regulatorien hinzu, die die Verwendung bestimmter Frequenzen zwingend vorschreiben.

Waren werden oftmals mit kontaktlosen Datenträgern versehen, um so die Waren elektronisch identifizieren zu können. Bei einer Sortieranlage für Pakete wird beispielsweise der Bestimmungsort sowie sonstige Daten wie Abmessungen und Gewicht des Paketes in einem Rechner gespeichert. Dem Paket wird ein kontaktloser Datenträger mit darin gespeicherter Identifikationsnummer aufgeklebt, so daß jederzeit anhand der Identifikationsnummer in Verbindung mit den in dem Rechner gespeicherten Daten beispielsweise festgestellt werden kann, welches der Bestimmungsort des Paketes ist. Dadurch ist die automatische Sortierung der Pakete stark vereinfacht. Problematisch ist jedoch der Fall, wenn die Ware ins Ausland verschickt wird, wo andere Regulatorien gelten und somit eine Sortieranlage im Ausland die Identifikationsnummer des Paketes nicht mehr lesen und verwenden kann, da die Arbeitsfrequenz eine andere ist.

Bei anderen Anwendungen durchläuft ein Gegenstand beispielsweise bei der Produktion mehrere Arbeitsstationen. Jedesmal sind andere Randbedingungen für die Erkennung des kontaktlosen Datenträgers gegebenen, so kann an einer Arbeitsstation eine besonders niedrige Feldstärke gefordert sein, um andere Einrichtungen nicht zu stören, an einer anderen Arbeitsstation ist dagegen eine besonders große Reichweite erforderlich. Dies läßt sich mit einer einzigen Arbeitsfrequenz oftmals nicht erreichen. Auch müssen eventuell unterschiedliche Feldarten verwendet werden, da elektrische und induktive Felder unterschiedliche Eigenschaften haben und diese sich wiederum von denen elektromagnetischer Wellen unterscheiden. Für die Fähigkeit, Daten einer bestimmten Frequenz über eine bestimmte Feldart empfangen zu können, wird nachfolgend der Begriff "Übertragungsbereich" verwendet. Eingeschlossen ist natürlich die Fähigkeit, Daten in diesem Bereich zu senden.

Als Möglichkeit, Empfangsparameter zu verändern, ist beispielsweise aus der US 5,572,226 die Verwendung von mehreren Antennen bekannt, wobei durch ein fortlaufendes Umschalten zwischen den Antennen und Messung der Stärke eines Empangssignals feststellbar ist, in welcher Antennenkonstellation die Kommunikation mit einem Schreib-/Lesegerät erfolgen soll. Dies ist jedoch relativ aufwendig. Das Dokument offenbart die Merkmale des Oberbegriffes von Anspruch 1.

Aufgabe der Erfindung ist es, einen Datenträger anzugeben, der in verschiedenen Übertragungsbereichen eingesetzt werden kann und der trotzdem kostengünstig herstellbar ist.

Diese Aufgabe wird gemäß der Erfindung durch einen Datenträger gemäß Hauptanspruch 1 gelöst.

Die Frequenzen für Datenträger sind sehr unterschiedlich. Im sogenannten VHF-Bereich (very high frequency) liegt eine gebräuchliche Frequenz bei 13,56 MHz. Im sogenannten UHF-Bereich (ultra high frequency) sind Frequenzen von 868 MHz, 915 MHz und 2,45 GHz einsetzbar. Es ist nicht möglich, diesen Frequenzbereich mit einer einzigen Antenne abzudecken, da im Bereich von 13,56 MHz die Daten- und Energieübertragung über ein induktives Feld erfolgt, während es sich bei den Frequenzen im UHF-Bereich um elektromagnetische Wellen handelt.

Die Datenverarbeitungseinheit kann ohne größere Probleme so ausgestaltet werden, daß sie verschiedene Frequenzen verarbeiten kann, während dies bei der Antenne nicht möglich ist. Gemäß der Erfindung werden deshalb mindestens zwei Antennen eingesetzt, die jeweils für unterschiedliche Übertragungsbereiche geeignet sind. Für den UHF-Bereich ist eine Dipolantenne und für den VHF-Bereich eine Schleifenantenne geeignet. Die Datenverarbeitungseinheit braucht nun nur noch zu erkennen, in welcher Antenne das stärkere Empfangssignal anliegt, wodurch erkennbar ist, nach welchem Standard eine Lese/Schreibeinheit arbeitet.

Weiterhin ist vorteilhaft, wenn der Datenträger eine zusätzliche kapazitive Antenne besitzt. Somit ist auch der dritte mögliche Übertragungsweg von dem erfindungsgemäßen Datenträger abgedeckt. Für jeden Einsatzbereich kann so eine optimale Frequenz und Feldart verwendet werden, ohne daß auf die Beschaffenheit des kontaktlosen Datenträgers Rücksicht genommen werden muß.

Weitere Vorteile ergeben sich, wenn die nicht für die Übertragung von Daten benutzte Antenne für die Übertragung von Energie zur Stromversorgung des kontaktlosen Datenträgers verwendet wird.

Für die Herstellung der verschiedenen Antennen ist es günstig, wenn sie zwar eine Einheit bilden, aber bei der Herstellung in verschiedenen Schritten gefertigt und danach zusammengesetzt werden.

Die Erfindung wird nachfolgend anhand von Ausführungsbeispielen näher erläutert. Es zeigt:
- Figur 1: ein erstes Ausführungsbeispiel eines erfindungsgemäßen Datenträgers mit drei getrennten Antennen,
- Figur 2: eine normale Schleifenantenne
- Figur 3: eine Dipolantenne und
- Figur 4: eine Kombination der Antennen von Figur 2 und Figur 3 in einem Datenträger als zweites Ausführungsbeispiel.

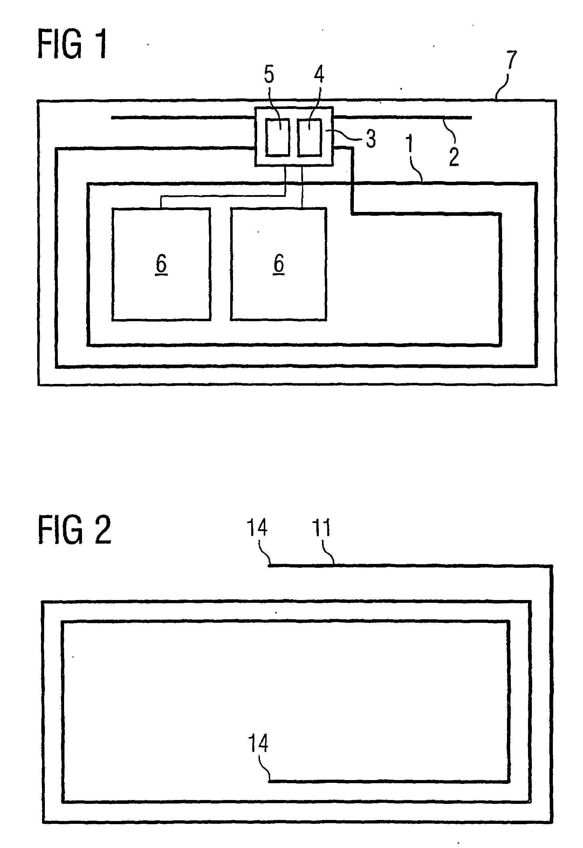

In dem Ausführungsbeispiel von Figur 1 sind auf einem kontaktlosen Datenträger 7 drei verschiedene Antennen vorgesehen, nämlich eine Schleifenantenne 1, eine Dipolantenne 2 und eine kapazitive Antenne 6, die jeweils mit einer Datenverarbeitungseinheit 3 verbunden sind. Die Datenverarbeitungseinheit 3 weist Mittel 4 zum Erkennen eines Übertragungsbereichs mit dem stärksten Empfangssignal auf. Dabei werden die Empfangssignale der drei Antennen 1, 2 und 6 überwacht. Wenn sich der Datenträger im Bereich eines Schreib-/Lesegerätes befindet, das im UHF-Bereich arbeitet, so wird am Ausgang der Dipolantenne 2 ein stärkeres Empfangssignal vorliegen als bei der für den VHF-Bereich geeigneten Antenne 1 und der kapazitiven Antenne 6 für die Übertragung über ein kapazitives Feld. Entsprechendes gilt, wenn Signale in den anderen Frequenzbereichen beziehungsweise über ein kapazitives Feld übertragen werden. In diesem Ausführungsbeispiel ist also die Erkennung eines Übertragungsbereiches mit dem stärksten Empfangssignal gleichbedeutend mit der Auswahl der Antenne 1, 2 oder 6 mit dem stärksten Empfangssignal. Aufgrund des detektierten Übertragungsbereiches wird eine Empfangssignalaufbereitungseinheit 5 so eingestellt, daß eine Verarbeitung von Frequenzen im detektierten Frequenzbereich bei Verwendung der jeweils geeigneten Antennen möglich ist. Die Antennen 1 und 2 sind so aufeinander abgestimmt, daß eine Trennung der Antennenanschlüsse nicht notwendig ist, sondern die Antennen 1 und 2 sich gegenseitig nicht stören.

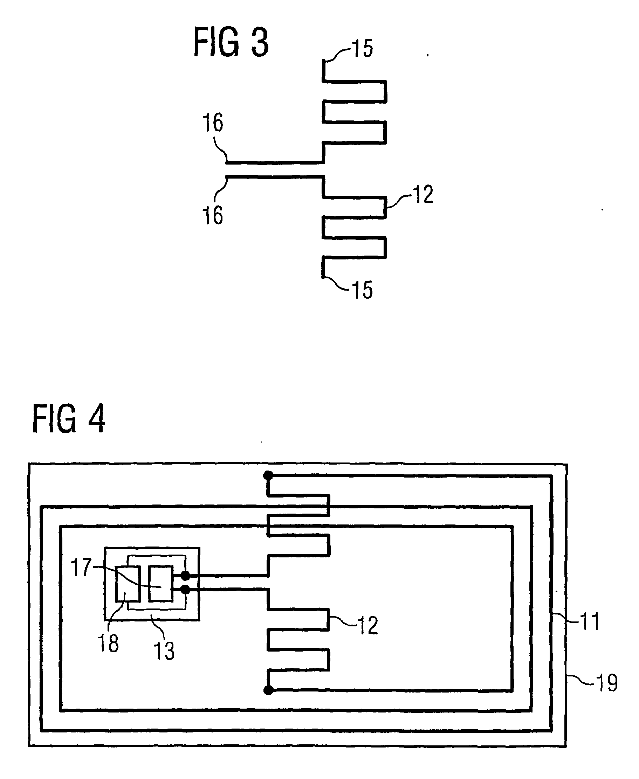

Im zweiten Ausführungsbeispiel gemäß den Figuren 2 bis 4 werden eine Schleifenantenne 11 und eine Dipolantenne 12 so zusammengeschaltet, daß ebenfalls der Empfang in verschiedenen Frequenzbereichen möglich ist. Die Spulenanschlüsse 14 der Schleifenantenne 11 in Figur 2 werden mit den Enden 15 der Dipolantenne 12 gemäß der Figur 3 zusammengeschaltet. Es ergibt sich dadurch eine Reihenschaltung aus der Dipolantenne 12 und der Schleifenantenne 11. Die Anschlüsse 16 der Dipolantenne 12 bilden den gemeinsamen Anschluß für die zusammengeschalteten Antennen 11 und 12. Die Dipolantenne 12 ist im VHF-Bereich nahezu unwirksam, aber elektrisch leitend. Daher liegt bei Empfang eines VHF-Signales dieses an Anschlüssen 16 der Dipolantenne 12 an, ohne daß es zu einer Beeinträchtigung des VHF-Signales kommt.

Bei Empfang eines UHF-Signales wirkt sich die Schleifenantenne 11 nicht nachteilig auf das UHF-Signal aus. Dieses kann ebenfalls an den Anschlüssen 16 der Dipolantenne 12 abgegriffen werden. Wie im Ausführungsbeispiel von Figur 1 sind Mittel 17 zum Erkennen eines Übertragungsbereichs mit dem stärksten Empfangssignal vorhanden. Diese Mittel 17 müssen eine Datenverarbeitungseinheit 13 jedoch nicht mehr so steuern, daß auf verschiedene Antennen 11 und 12 umgeschaltet wird, sondern es genügt, eine Empfangssignalaufbereitungseinheit 18 auf diesen Übertragungsbereich einzustellen.

Bei einer Ausführung eines Datenträgers nach dem ersten Ausführungsbeispiel von Figur 1 kann die zweite oder dritte Antenne dazu verwendet werden, um Energie entkoppelt von den Daten auf der zweiten "freien" Antenne zu übertragen. Dadurch können Daten und Energie auf unterschiedlichen Frequenzen übertragen werden, was zu Vorteilen bei der Erkennungssicherheit führt.

Die kapazitive Antenne zeichnet sich dadurch aus, daß sie bei sehr kleinen Abständen wie ein Kondensator wirkt und sowohl Daten als Energie über das kapazitive Feld übertragen werden können. Die kapazitive Antenne kann wie in Figur 1 als dritte Antenne ausgeführt werden oder aber als integraler Bestandteil einer der beiden anderen Antennen 1 oder 2 ausgebildet sein.

## Patentansprüche

1. Kontaktloser Datenträger mit
- einer Datenverarbeitungseinheit (3; 13) und
- mindestens zwei Antennen (1, 2, 6; 11, 12),
wobei eine Antenne eine Dipolantenne (2; 12) und eine andere Antenne eine Schleifenantenne (1; 11) ist,
**dadurch gekennzeichnet, daß**
zumindest eine Dipolantenne (2; 12) und eine Schleifenantenne (1;11) für jeweils unterschiedliche Übertragungsbereiche, direkt miteinander verbunden sind,
die Datenverarbeitungseinheit (3; 13) Mittel (4; 17) zum Erkennen des Übertragungsbereichs mit dem stärksten Empfangssignal aufweist und eine Empfangssignalaufbereitungseinheit (5; 18) auf diesen Übertragungsbereich einstellbar ist.

2. Kontaktloser Datenträger nach Anspruch 1,
**dadurch gekennzeichnet, daß**
der Datenträger eine zusätzliche kapazitive Antenne (6) aufweist.

3. Kontaktloser Datenträger nach Anspruch 1,
**dadurch gekennzeichnet, daß**
über eine der Antennen Daten und über eine andere Antenne Energie zur Stromversorgung des Datenträgers (7) übertragen wird.

4. Kontaktloser Datenträger nach Anspruch 1,
**dadurch gekennzeichnet, daß**
die mindestens zwei Antennen (11; 12) einzeln hergestellte Komponenten sind, die elektrisch leitend miteinander verbunden sind.

## Claims

1. Contactless data storage medium having
- a data processing unit (3; 13) and
- at least two antennas (1, 2, 6; 11, 12), one antenna being a dipole antenna (2; 12) and another antenna being a loop antenna (1; 11),
**characterized in that** at least one dipole antenna (2; 12) and one loop antenna (1; 11) for respectively different transmission bands, being directly connected to one another,
the data processing unit (3; 13) has means (4; 17) for identifying the transmission band with the strongest received signal, and a received signal preprocessing unit (5; 18) can be set to this transmission band.

2. Contactless data storage medium according to Claim 1,
**characterized in that**
the data storage medium has an additional capacitive antenna (6).

3. Contactless data storage medium according to Claim 1,
**characterized in that**
data is transmitted via one of the antennas, and power for supplying power to the data storage medium (7) is transmitted via another antenna.

4. Contactless data storage medium according to Claim 1,
**characterized in that** the at least two antennas (11; 12) are individually produced components, which are electrically conductively connected to one another.

## Revendications

1. Support de données sans contact, comportant
- une unité (3; 13) de traitement de données et
- au moins deux antennes (1, 2, 6; 11, 12),
une antenne étant une antenne dipôle (2; 12) et une autre antenne étant une antenne-cadre (1; 11),
**caractérisé en ce que**
au moins une antenne dipôle (2; 12) et une antenne-cadre (1; 11) pour des domaines de transmission respectivement différente sont reliées directement l'une à l'autre,
l'unité (3; 13) de traitement de données comporte des moyens (4; 17) pour reconnaître le domaine de transmission ayant le signal de réception le plus intense et une unité (5; 18) de préparation des signaux de réception pouvant être réglés sur ce domaine de transmission.

2. Support de données sans contact suivant la revendication 1,
**caractérisé en ce que**
le support de données comporte une antenne (6) capacitive supplémentaire.

3. Support de données sans contact suivant la revendication 1,
**caractérisé en ce que**
des données sont transmise par l'intermédiaire de l'une des antennes et de l'énergie pour l'alimentation en courant du support (7) de données est transmise par l'intermédiaire d'une autre antenne.

4. Support de données sans contact suivant la revendication 1,
**caractérisé en ce que**
les au moins deux antennes (11; 12) sont des composants produits individuellement, qui sont reliés l'un à l'autre de manière conductrice de l'électricité.
